# EUROPEAN PATENT SPECIFICATION

(11) **EP 3 662 425 B1**
(45) Date of publication and mention of the grant of the patent: **24.01.2024**
(21) Application number: 18841435.3
(22) Date of filing: 03.08.2018
(51) Int. Cl.: G06Q 10/08, F42B 35/00, F42B 39/00, F42B 99/00

(54) **METHODS AND APPARATUS FOR TRACKING AMMUNITION**
VERFAHREN UND VORRICHTUNG ZUR VERFOLGUNG EINER MUNITION
PROCÉDÉS ET APPAREIL DE SUIVI DE MUNITIONS

(30) Priority: 04.08.2017 US 201762541504 P
(43) Date of publication of application: 10.06.2020
(73) Proprietor: The Bullet ID Corporation, Toronto, ON M3J 3L5 (CA)
(72) Inventor: KIRICK, Robert, Ramsey, MN 55303 (US); SHERER, Patrick H., Maple Grove, MN 55369 (US); WILLIAMS, James Glenn, Mississauga, ON L5L 3Z1 (CA); LEWIS, Bruce, Toronto, ON M4V 1K4 (CA)
(74) Representative: Optimus Patents Limited
(86) International application number: PCT/CA2018/000148
(87) International publication number: WO 2019/023788

(56) References cited:
- KR-A- 20170 021 177
- US-A1- 2002 178 959
- US-A1- 2003 217 665
- US-A1- 2003 217 665
- US-A1- 2004 200 109
- US-A1- 2004 220 883
- US-A1- 2016 257 132
- US-A1- 2017 221 115

## Description

### FIELD

The following application relates to ammunition tracking, and in particular to systems and methods for tracking ammunition with identifying indicia and inventory trackingsystems.

### BACKGROUND

After a firearm has been used, the casing of the ammunition may be ejected fromthe firearm. During operation of the firearm, certain distinguishing marks may be left on the casing, which may be analyzed to ascertain information about the firearm, such as the type of firearm used to fire the ammunition. This information may contribute to identifying the person who operated the firearm. Accordingly, ballistic evidence from casings may be used by law enforcement and the judicial system to make decisions on arrests and convictions.

Typically, to identify whether a suspect firearm fired ammunition corresponding toa casing found at a crime scene, the suspect firearm is used to fire several test ammunition sharing the same brand as the ammunition corresponding to the casing found at the crime scene. Then, the markings on these test ammunition are compared with markings on the casing found at the crime scene to determine if the suspect firearm fired the ammunition corresponding to the casing found at the crime scene.

Unfortunately, this process is subject to issues of variability, affecting its repeatability, reliability, and accuracy. Moreover, as many firearms are mass produced, the typical ballistics analysis may not reliably link a particular casing or a particular ammunition to aparticular firearm at the exclusion of other firearms. It would be desirable to more reliably track the origin of casings and ammunition.

US2003/217665 A1 (Rennard) provides an ammunition tracking system. A human readable tracking number is placed in two locations on a cartridge casing. The tracking system then operates by several steps. The manufacturer has an identification number for each retailer or distributor. The manufacturer knows an invoice number for each order, before shipping to the retailer or distributor. The manufacturer scans each pallet of ammunition that is being shipped to fulfill the invoice/order. Scanning the pallet automatically links the ammunition being shipped with the retailer or distributor to which the pallet is being shipped. A central database server thus holds a link between the pallet of ammunition and the retailer or distributor, before the pallet is shipped. Subsequently, the ammunition from the pallet will be sold by a retailer. When the sale occurs, the retailer scans a tracking barcode or enters a package identification number, and the retailer also captures the customer's name and other particulars. That information will then be sent to the central database. If a spent cartridge is found, then the human readable number on the casing can be entered into the central database. From the database, details of the original customer can be retrieved. US2002/0178959 A1 (Rennard) provides an ammunition tracking system, with a central database and a process for linking customer details to cartridges. The central database and process are similar to those in US2003/217665 A1 (Rennard). US2017/0221115A1 (Jarvis) considers the problem of cartridges that are collected up and removed from an incident scene, or are retained within a firearm after discharge, and hance are not available later to the authorities. A further problem is the wearing out of microstamps that are used to imprint the make, model and serial number of a gun on a cartridge, at the instant when the cartridge is fired. In order to address these issues, a ballistic information number is inscribed on each bullet, for example on the base of the bullet, at the time of manufacture. The ballistic information number on a bullet is available in a database, and can then be used to identify the person who purchased the bullet. US2004/0220883 A1 (West) provides a system operated by a 'point-of-sale' retailer. When the retailer wants to sell ammunition, the retailer asks for details from the purchaser. The retailer then verifies that the purchaser's details are correct. The retailer then inscribes information into the ammunition cartridge casing that identifies the purchaser, and can then sell the ammunition. If the ammunition is then later fired, and the spent cartridges are found, the purchaser can be identified from the information that had been inscribed into the ammunition cartridge.

### SUMMARY

Disclosed herein is an ammunition tracking system comprising: a server having a data storage; ammunition; said server configured to: receive data corresponding to a symbolic encoded identifier marked on a casing of the ammunition, wherein at least one error detection code is incorporated into the symbolic encoded identifier; receive data corresponding to a purchaser of the ammunition; associate the data corresponding to the symbolic encoded identifier with the data correspondingto the purchaser of the ammunition; receive data corresponding to a retrieved ammunition casing; compare the data corresponding to the retrieved ammunition casing with the data corresponding to identification of the ammunition; and upon matching the data corresponding to the retrieved ammunition casing with the data corresponding to identification of the ammunition, transmit the data corresponding to the purchaser of the ammunition.

Disclosed herein is a method of identifying a purchaser of ammunition based on a retrieved ammunition casing, comprising: populating a data storage of a server by: receiving data corresponding to identification of the ammunition marked on a casing of the ammunition, wherein at least one error detection code is incorporated into the identification of the ammunition; receiving data corresponding to the purchaser of the ammunition; associating the data corresponding to identification of the ammunition with the data corresponding to the purchaser of the ammunition; receiving data corresponding to the retrieved ammunition casing; comparing the data corresponding to the retrieved ammunition casing with the data corresponding to identification of the ammunition; and upon matching the data corresponding to the retrieved ammunition casing with the data corresponding to identification of the ammunition, transmitting the data corresponding to the purchaser of the ammunition.

Many further features and combinations thereof concerning embodiments described herein will appear to those skilled in the art following a reading of the instant disclosure.

### BRIEF DESCRIPTION OF DRAWINGS

In the figures which illustrate example embodiments:
Figure 1 is a schematic diagram of an ammunition tracking system;
Figures 2A-2D are schematic diagrams depicting a marking apparatus of the system of Figure 1;
Figure 2E is a schematic diagram showing an example marking on a round of ammunition;
Figure 2F is a schematic diagram showing an example marking and an example obscured marking for a round of ammunition;
Figures 3A-3M are schematic diagrams depicting another marking apparatus;
Figure 4 is a block diagram of a server of the database system of Figure 1;
Figure 5 is a block diagram of software at the server of Figure 4;
Figure 6 is a block diagram of components of the software of Figure 5;
Figure 7 is a schematic diagram of a database and database tables of the database system of Figure 1;
Figure 8 is a flow diagram of a process of populating the database of the database system of Figure 1; and
Figure 9 is a flow diagram of a process of identifying the purchaser of ammunition based on a retrieved ammunition casing.

### DETAILED DESCRIPTION

An ammunition identification and inventory tracking system and a method for its use are disclosed. Ammunition such as bullets may be manufactured with a unique mark on the casing. Data corresponding to the unique mark may be stored on a database of the ammunition identification system. When the ammunition is distributed or purchased, the identity of the distributor or purchaser is also stored on the database and associated with the distributed or purchased ammunition. If a firearm is operated to fire ammunition having the casing with the unique mark, the discarded casing may be scanned to capture an image of the unique mark. The ammunition identification system may compare the image of the unique mark with the unique marks stored on the database to identify characteristics or features of the ammunition, such as the identity of the manufacturer, distributor, retailer, or purchaser of the ammunition, or supplementary data, such as the machinery used to manufacture the ammunition, components used to manufacture the ammunition, production date, lot number of the ammunition, lot numbers of the components used, the identity of the manufacturer, caliber, gauge, bore, type of projectile used in the ammunition, and the like. Such information may be useful in, for example, tracking ammunition through a supply chain.

Methods and apparatus described herein are used for marking and tracking data related to ammunition used in firearms for civilians or the military, such as ammunition for pistols, rifles (which may include small caliber pistols), and shotguns. In some examples, the ammunition may be bullets, such as small-caliber bullets from 0.17 to 0.50 caliber. In other examples, the ammunition includes ammunition of different types, such as shotgun cartridges, and different sizes, such as 2, 3, 4, 8, 10, 11, 12, 14, 15, 16, 18, 20, 24, 28, and 32 gauge and 0.410 bore. In still other examples, the ammunition may be greater than 0.50 caliber, 32 gauge, and 0.410 bore, or less than 0.17 caliber, 2 gauge, and 0.410 bore. As used herein, references to marking of ammunition include markings applied to the casing.

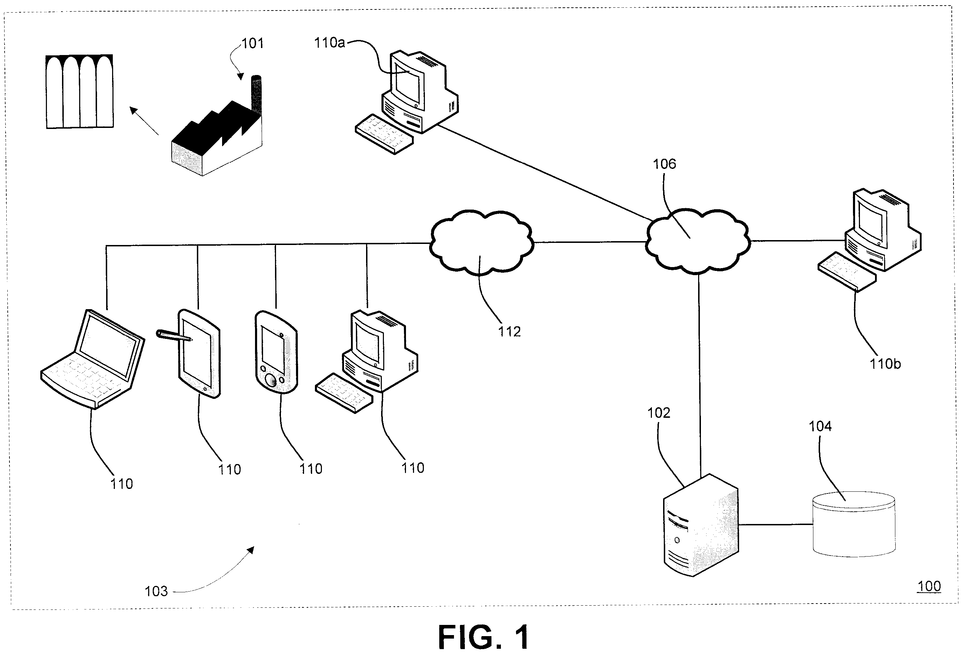

Figure 1 depicts an example ammunition tracking system 100. Ammunition tracking system 100 includes a marking facility 101 and a database system 103 which includes a server 102 with interconnected data storage 104. Server 102 may be connected to a network 106, which may be an 1Pv4, 1Pv6, X.25, IPX compliant or similar network, including one or more wired or wireless access points. Network 106 may be a local-area network (LAN) or a wide- area network (WAN), such as the internet, and may be connected with other communications networks, such as GSM/GPRS/3G/4G/LTE networks. Each server 102 may host database data in its data storage 104. In some embodiments, the database system 103 may comprise more than one server 102 and data store 104.

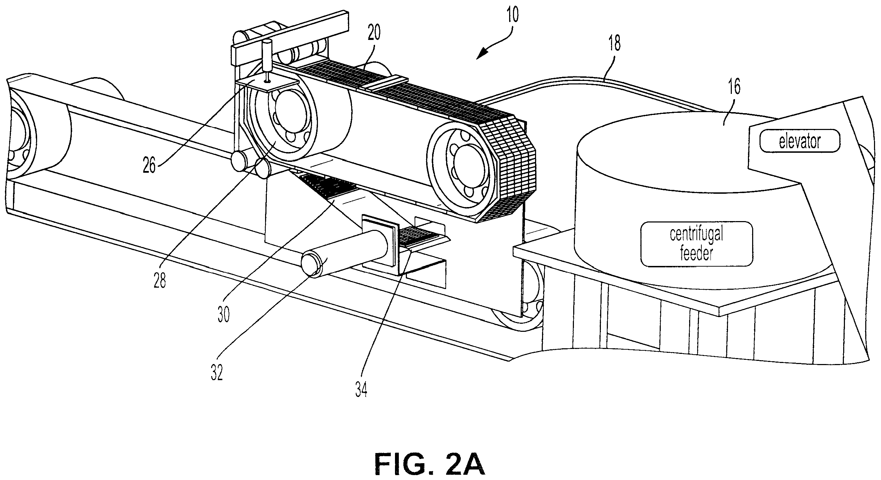

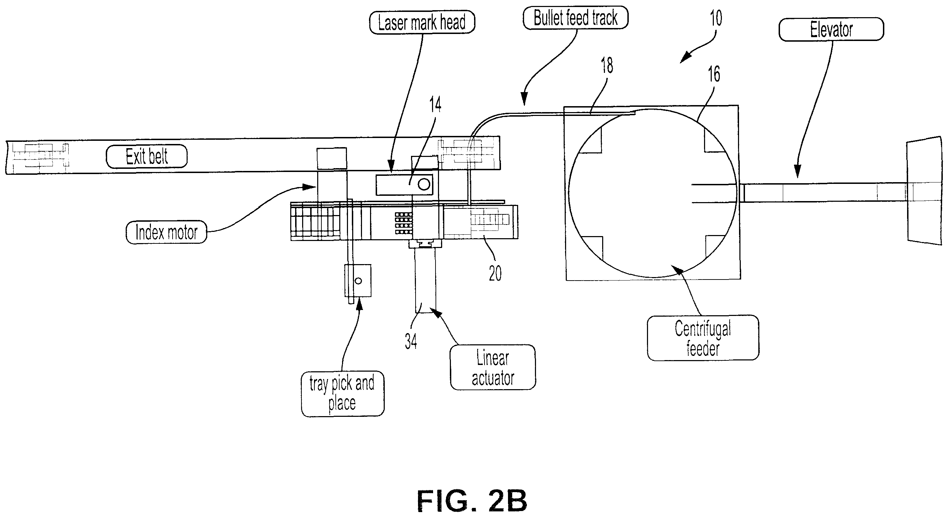

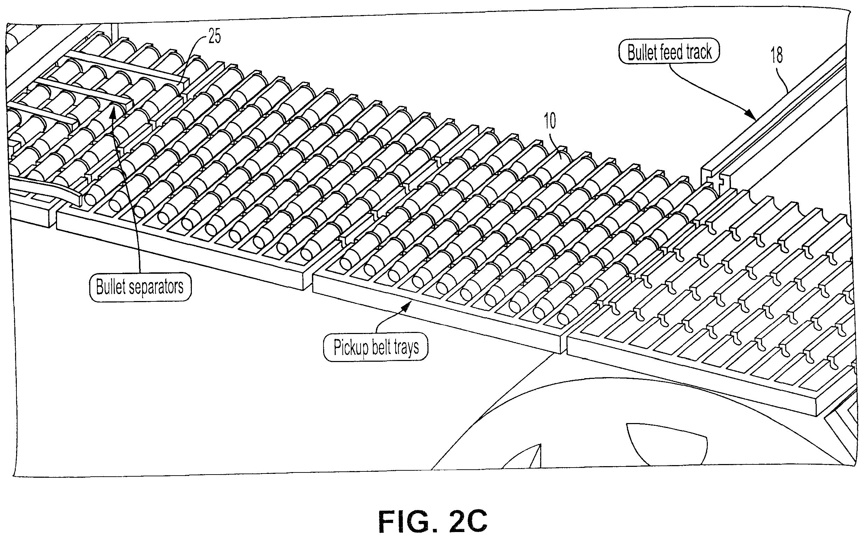

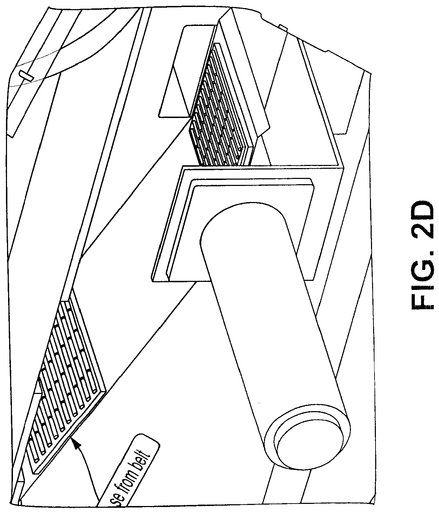

Figures 2A-2D depict marking facility 101 in greater detail. Marking facility 101 includes an ammunition handling apparatus 10. Ammunition handling apparatus 10 receives a bulk supply of ammunition, such as bullets 12, isolates individual bullets 12, and precisely positions bullets 12 for marking with a laser marking head 14 and subsequent packaging.

Ammunition handling apparatus 10 receives bullets 12 in a vibratory feeder 16 operable to sequentially advance bullets 12 into a feed track 18 for individual handling. Feed track 18 is configured to align bullets 12 in a consistent orientation, e.g. with the bullet points facing horizontally forward.

Feed track 18 discharges bullets 12 onto a conveyor 20 for advancing the trays 26 to a marking location adjacent laser marking head 14. Each tray 26 has a plurality of pockets 22 for receiving and ordering bullets 12 in rows. Conveyor 22 is driven by one or more indexing motors 24.

Once bullets 12 are arranged in pockets 22 of conveyor 20, bullets 12 are advanced through bullet separators 25 and trays 26 are placed atop groups of bullets 12, e.g. by a pick and place robot.

Bullets 12 and trays 26 are passed around an inverting wheel 28, which reverses orientation such that bullets 12 are atop trays 26. The inverted trays 26 and bullets 12 are delivered to a marking station 28 by way of a chute 30.

Marking station 28 includes a nest 32 for receiving a single tray of bullets 12 and a linear actuator 34. Nest 32 may define stops (not shown) for precisely positioning a tray 28. Linear actuator 34 is extendable to push a tray of bullets 12 to a position below laser marking head 14.

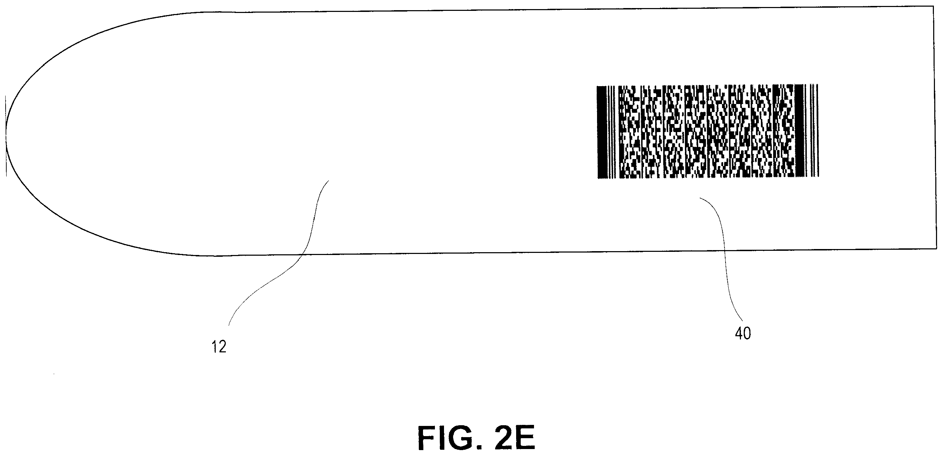

Laser marking head 14 engraves each bullet 12 with unique identifying indicia. An example marking 40 is schematically depicted in Figure 2E. As depicted in Figure 2E, the marking 40 may be oriented generally parallel to the length of the bullet 12. In some embodiments, the laser marking head 14 etches the marking 40 onto the surface of the casing of the ammunition. In some embodiments, the laser marking head 14 etches the marking 40 deeper into the casing of the ammunition.

Marking 40 is a unique identifier, such as a serial code, encoded in a machine- readable symbolic form. In addition to uniquely identifying a bullet 12, marking 40 may be a compound identifier, namely, an identifier with portions identifying characteristics of the bullet 12, such as machinery used, components used, production date, lot number of the bullet 12, lot numbers of the components used, the identity of the manufacturer, caliber, gauge, bore, type of projectile used in the ammunition, and the like. In some embodiments, the marking 40 may correspond to a unique identifier in a database which is associated with records in a database including the seller of the bullet 12, the purchaser of the bullet 12, and various other inventory tracking characteristics associated with bullet 12.

Marking 40 may be a one or two-dimensional barcode. Marking 40 is encoded using a format that provides for error correction. In an example, marking 40 conforms to the PDF417 standard.

Marking 40 is sized and applied to bullet 12 so as to allow scanning and decoding using a mobile computing device such as a typical smartphone camera.

A marking 40 having components that contrast with each other may improve detection and acquisition of the marking 40. Marking 40 may comprise a first component and a second component that contrasts with the first component. The first and second component of the marking 40 may improve the detection and acquisition of the marking 40 by an optical data acquisition device, such as a smartphone camera, handheld camera, a scanner, or a barcode scanner. For example, the first component may be generally dark in colour, such as black, and the second component may be generally light in colour, such as white, such that the first and second components contrast and the marking 40 may be detected and acquired by the optical data acquisition device.

The size of the marking 40 may be a function of the size of the ammunition upon which the marking 40 is applied. For example, ammunition of higher caliber, gauge, or bore may have a larger marking 40 applied thereon. Larger markings 40 may be more easily detected and acquired by the optical data acquisition device.

The marking 40 may be applied to ammunition having various types of casing. For example, the marking 40 may be visible on a silver- or bronze-coloured casing. For example, the marking 40 may be applied to a casing having a smooth surface finish, a matte surface finish, or a satin surface finish. For example, the marking 40 may be applied to casings made of metal or plastic, such as metal alloy, metal composite, polycarbonate, resin, or plastic material.

Where the PDF417 standard is used, at least one error detection and correction code words is added to the marking 40. In some embodiments, 2 to 512 error detection and correction code words may be added to the marking 40. When the marking 40 is captured and processed, the maximum number of corrections that may be made may equal to the number of code words added to the marking 40. In some embodiments, two code words may be held back to ensure reliability of the corrected information.

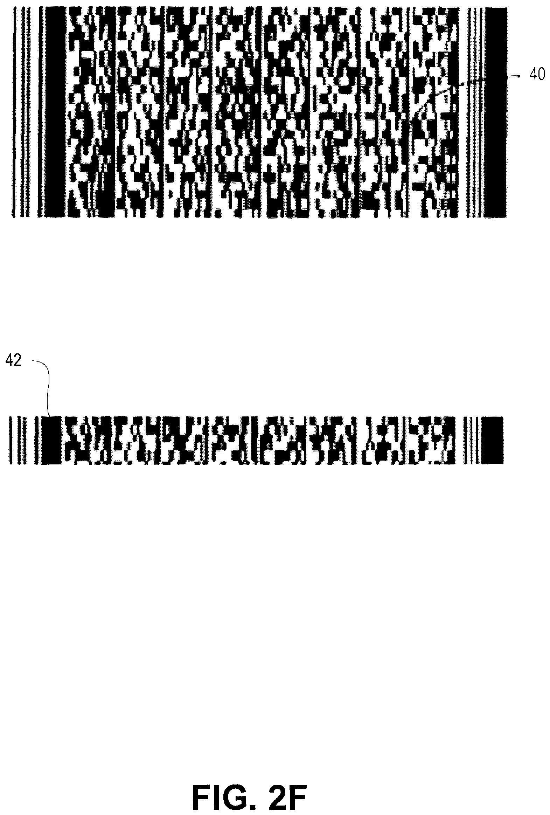

Accordingly, a portion of the marking 40 may be obscured, corrupted, worn out, destroyed, or otherwise may not be detected or captured by the optical data acquisition devices but the information associated with the marking 40 may still be recovered by the database system 103. Figure 2F depicts an example marking 40 and an obscured marking 42. In some embodiments, up to 85% of the marking 40 obscured, corrupted, worn out, destroyed, or otherwise may not be detected or captured by the optical data acquisition devices but the information associated with the marking 40 may still be recovered by the database system 103.

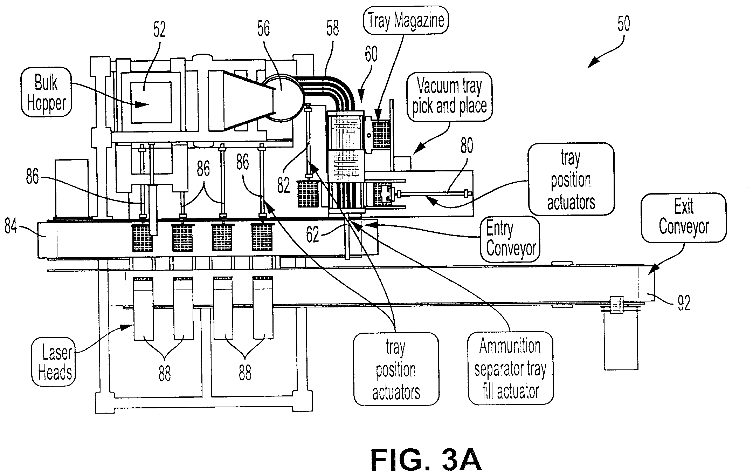

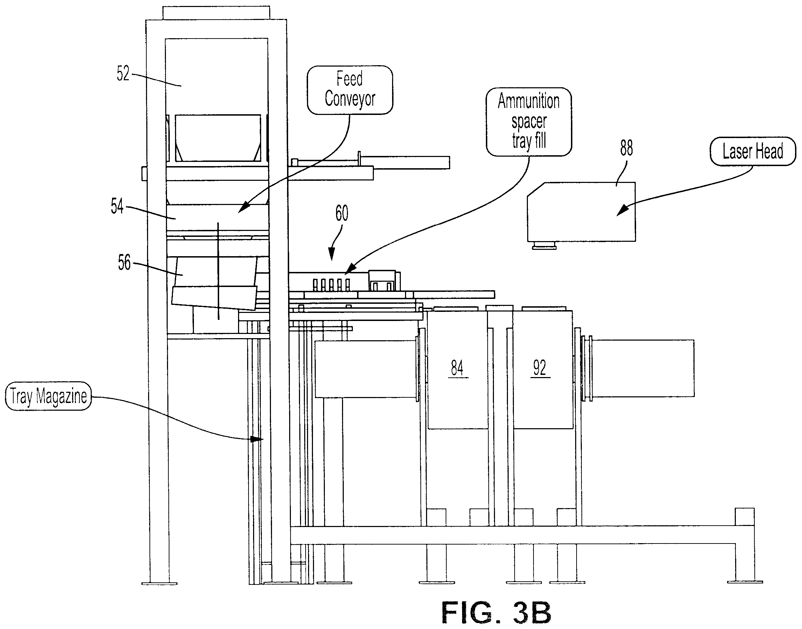

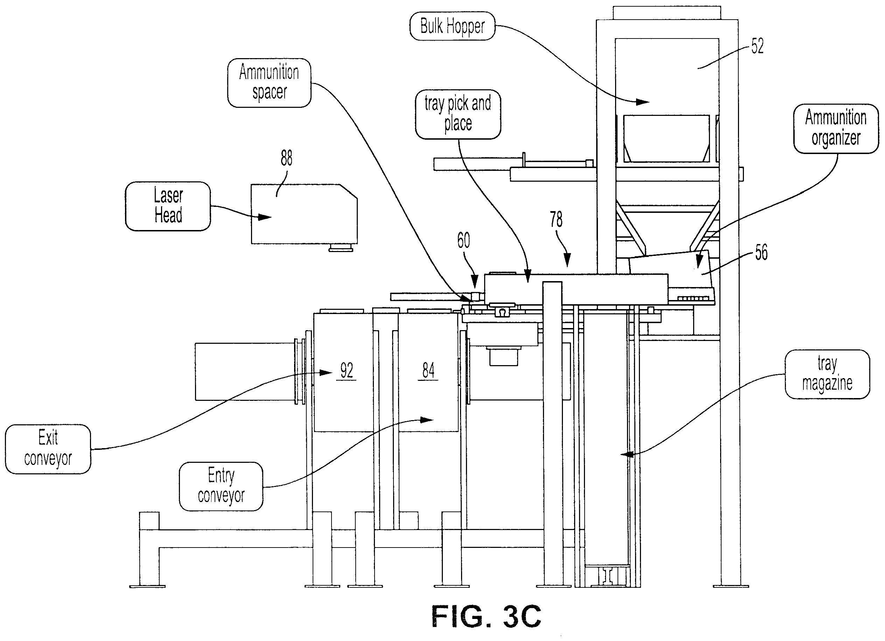

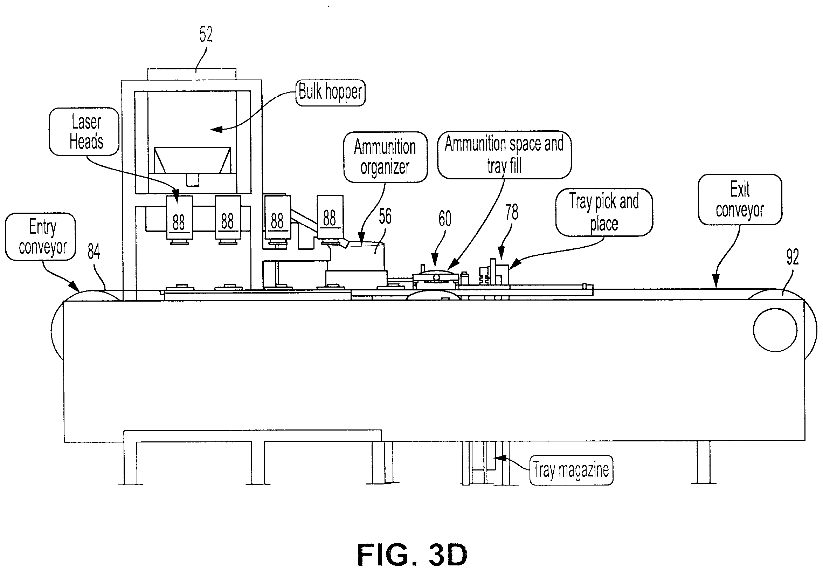

Figure 3A to Figure 3M are schematic diagrams depicting another example ammunition handling apparatus 50. Figures 3A, 38, 3C, and 3D depict the top view, left view, right view, and front view of the ammunition handling apparatus 50, respectively. The ammunition handling apparatus 50 may organize the rounds of ammunition fed into the ammunition handling apparatus 50 and may apply the marking 40 on the rounds of ammunition.

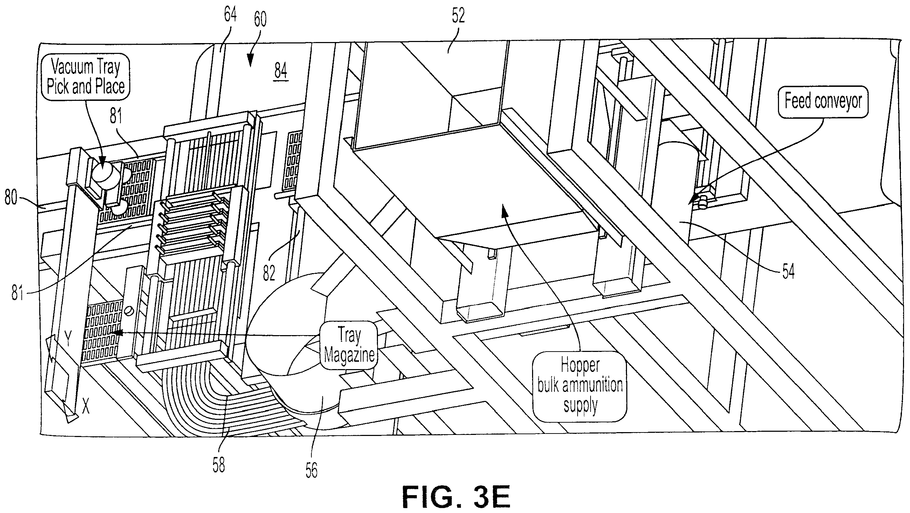

Rounds of ammunition may be fed into a hopper 52 of the ammunition handling apparatus 50. The rounds of ammunition may be directed from the hopper 52 to an ammunition organizer 56 by a feed conveyer 54, as depicted in Figure 38 and Figure 3E.

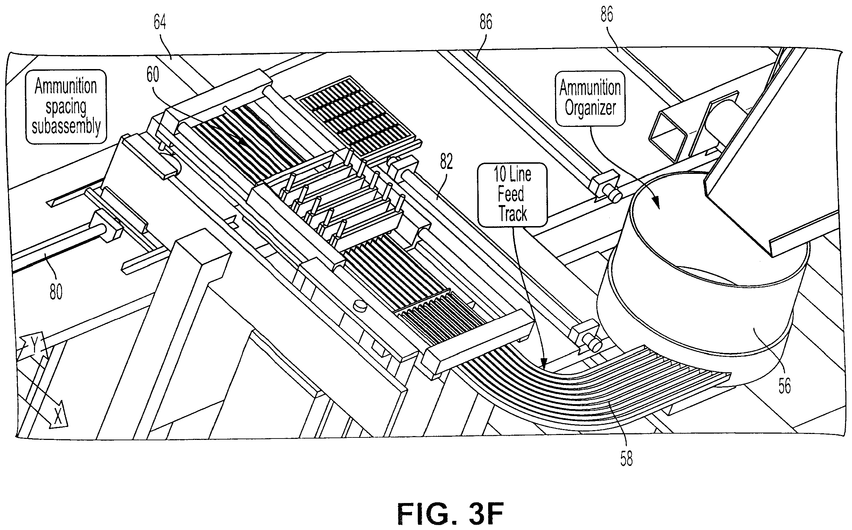

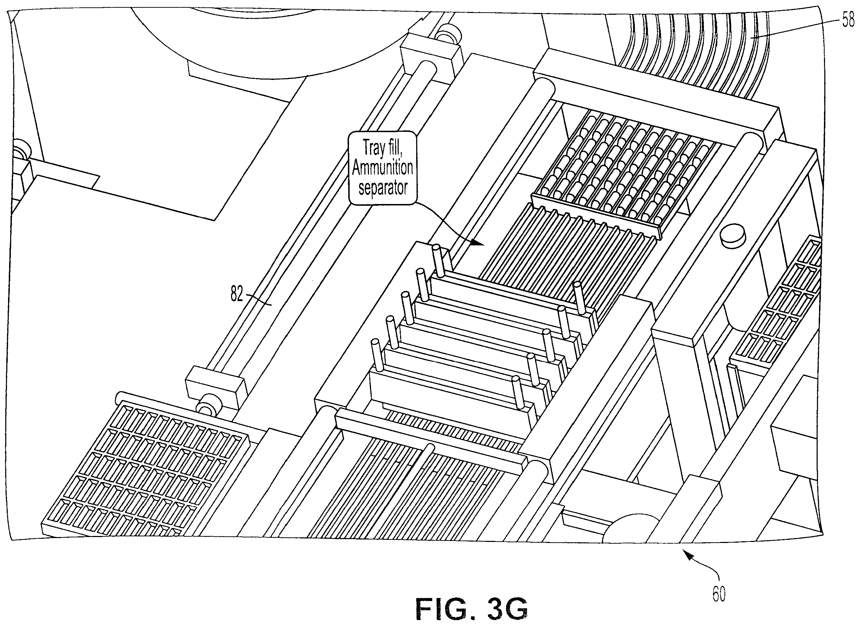

The ammunition organizer 56 organizes and positions the rounds of ammunition to exit the ammunition organizer 56 along a feed track 58. When the rounds of ammunition exit the ammunition organizer 56, the rounds of ammunition may be pointed towards the ammunition spacing subassembly 60. As depicted in Figure 3F and Figure 3G, the feed track 58 has 10 lines. In some embodiments, the feed track 58 may have more or less than 10 lines. The feed track 58 directs the rounds of ammunition from the ammunition organizer 56 to the ammunition spacing subassembly 60.

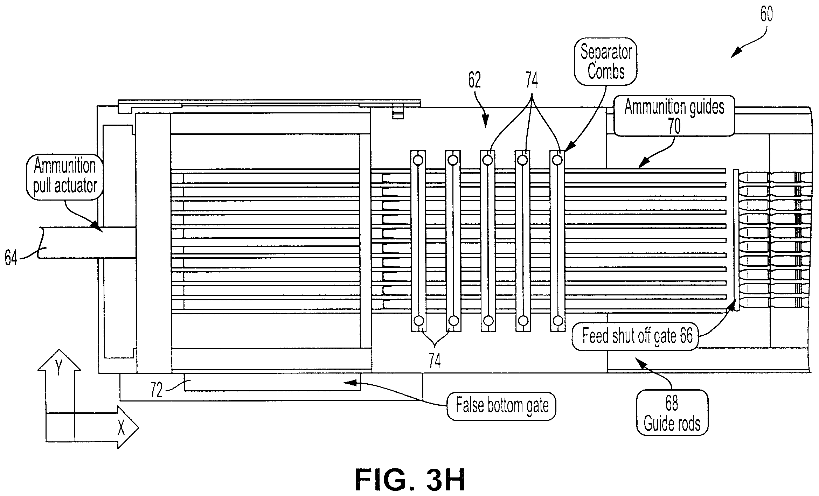

Figure 3H is a top view of the ammunition spacing subassembly 60. The ammunition spacing subassembly 60 may be configured to space out a number of rounds of ammunition, such that said number of rounds of ammunition may be received into a tray for marking said rounds of ammunition with the marking 40. The ammunition spacing subassembly 60 comprises a separator 62, a separator actuator 64, a feed shutoff gate 66, guide rods 68, ammunition guides 70, and a false bottom gate 72.

The separator 62 is coupled to the separator actuator 64, such that the separator actuator 64 may push and pull the separator 62. The guide rods 68 may be received by the separator 62, such that the separator actuator 64 pushes and pulls the separator 62 along the length of the ammunition spacing subassembly 60.

The feed shutoff gate 66 is positioned at a first end of the ammunition spacing subassembly 60 where the feed track 58 is joined to the ammunition spacing subassembly 60. The feed shutoff gate 66 is configured to separate a number of rounds of ammunition from the ammunition being supplied from the ammunition organizer 56. In some embodiments, the feed shutoff gate 66 is configured to raise and lower to separate the rounds of ammunition. When the feed shutoff gate 66 is raised or otherwise separating the number of rounds of ammunition from the ammunition being supplied from the ammunition organizer 56, no additional rounds of ammunition may be received into the ammunition spacing subassembly 60. The rounds of ammunition compile on the feed track 58 until the feed shutoff gate 66 lowers and the rounds of ammunition may be received into the ammunition spacing subassembly 60.

The ammunition guides 70 guide the ammunition along the length as the ammunition is spaced and moved by the separator 62. In some embodiments, the ammunition spacing subassembly 60 comprises a number of ammunition guides 70 that corresponds to the number of lines of the feed track 58. For example, as depicted in Figure 3G and Figure 3H, the feed track 58 has 10 lines, and the ammunition spacing subassembly 60 comprises 11 ammunition guides 70 to receive the 10 rows of rounds of ammunition.

The false bottom gate 72 of the ammunition spacing subassembly 60 may be configured to slide from the ammunition spacing subassembly 60. When the false bottom gate 72 slides from the ammunition spacing subassembly 60, an opening defined by the ammunition spacing subassembly 60 is exposed, such that rounds of ammunition resting on the false bottom gate 72 may fall through the ammunition spacing subassembly 60.

The separator 62 of the ammunition spacing subassembly 60 is configured to space out rounds of ammunition received in the ammunition spacing subassembly 60. The separator 62 has one or more separator combs 74, as depicted in Figure 3H. The number of separator combs 74 depends, in part, on the dimensions, size, and configuration of trays in which the rounds of ammunition may be received. As depicted in Figure 3H, the separator 62 has 5 separator combs 74.

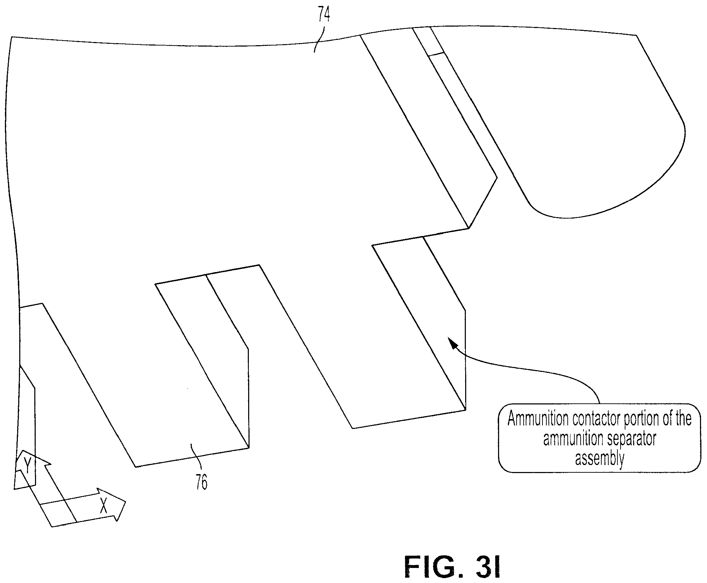

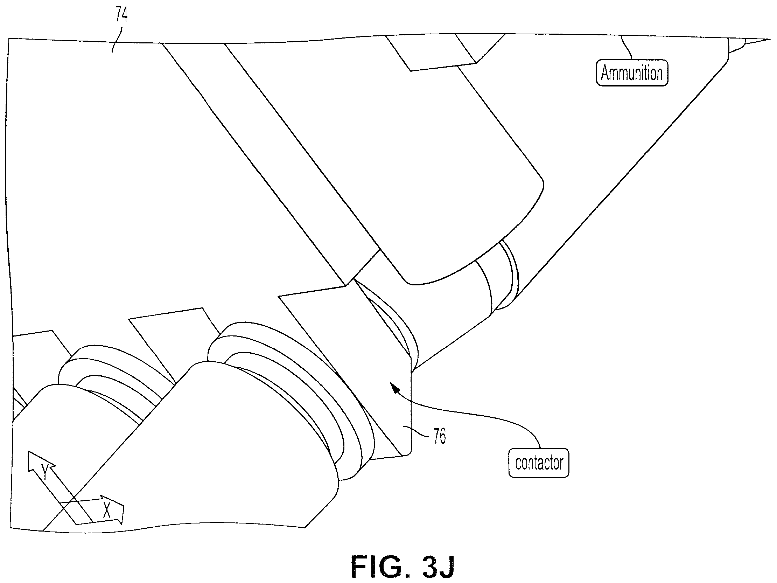

The separator combs 74 of the separator may be raised and lowered to separate the rounds of ammunition received in the ammunition spacing subassembly 60. Figure 3I and Figure 3J depict contactor 76 of the separator combs 74. As illustrated in Figure 3I and Figure 3J, the contactor 76 may be shaped, such that when the separator combs 74 are lowered towards the rounds of ammunition, the contactor 76 separate the rounds of ammunition. In some embodiments, the contactor 76 may be rounded, wedged, bevelled, and the like.

When the rounds of ammunition are received in the ammunition spacing subassembly 60 and separated from the other rounds of ammunition by the feed shutoff gate 66, said rounds of ammunition received in the ammunition spacing subassembly 60 are positioned at an end of the ammunition spacing subassembly 60 that is proximate to the feed shutoff gate 66. The separator actuator 64 moves the separator 62 over the rounds of ammunition and the separator combs 74 are lowered to space out the rounds of ammunition.

After the rounds of ammunition are spaced out by the separator combs 74, while the separator combs 74 are in a lowered position, the separator actuator 64 moves the separator 62 towards the end having the false bottom gate 72, as depicted in Figure 3H, such that the spaced out rounds of ammunition are moved towards and positioned above the false bottom gate 72.

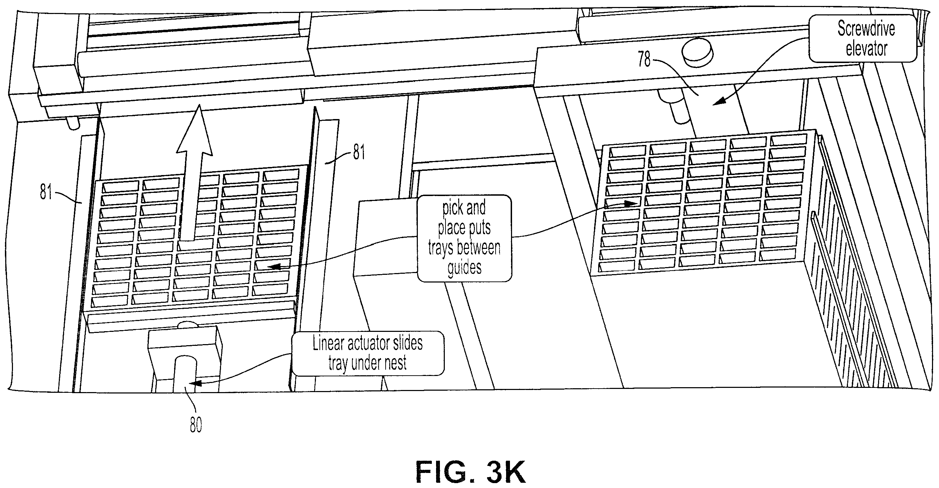

The ammunition handling apparatus 50 comprises a magazine of trays for receiving the rounds of ammunition spaced out by the ammunition spacing subassembly 60. As depicted in Figure 3K, a screwdrive elevator 78 raises the trays and the trays may be placed in front of a linear actuator arm 80. In some embodiments, the screwdrive elevator 78 may raise the trays to a robotic arm, which may couple to the tray and pick up the tray, such as by suction or a vacuum, and place the tray in front of the linear actuator arm 80. Guides 81 may promote the proper placement of the tray such that the linear actuator arm 80 may push the tray. The linear actuator arm 80 is configured to push the tray under the ammunition spacing subassembly 60, particularly the opening defined by the ammunition spacing subassembly 60 that is exposed when the false bottom gate 72 slides from the ammunition spacing subassembly 60.

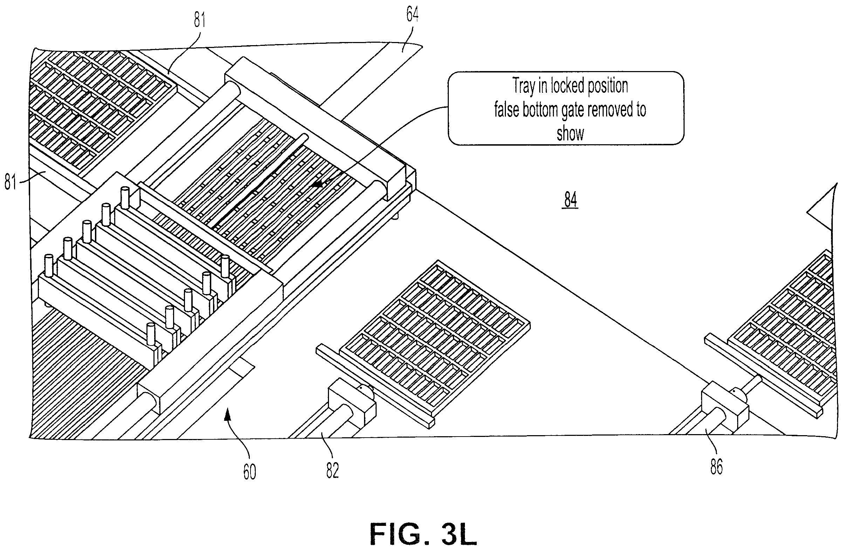

When the tray is pushed to a position under the ammunition spacing subassembly 60, as depicted in Figure 3L, the tray may receive the spaced out rounds of ammunition that have been spaced out by the ammunition spacing subassembly 60. The rounds of ammunition fall through the opening defined by the ammunition spacing subassembly 60 and into the tray.

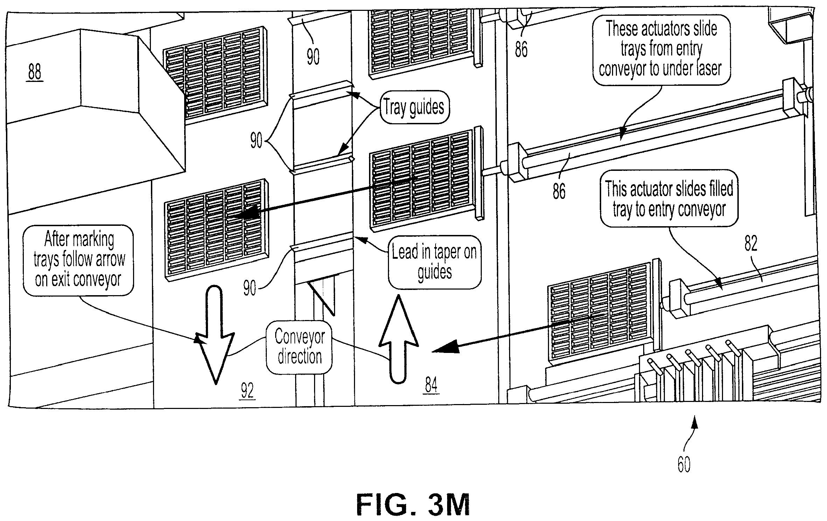

After the rounds of ammunition are received in the tray, the linear actuator arm 80 pushes the tray to a position in front of a linear actuator arm 82. When the tray is in proper position in front of the linear actuator arm 82, the linear actuator arm 82 pushes the tray onto an entry conveyer 84, as depicted in Figure 3M.

Referring to Figure 3A, the entry conveyer 84 conveys trays placed thereon in a position in front of linear actuator arms 86, which push the trays to a position below laser heads 88. The ammunition handling apparatus 50 comprises guides 90 to facilitate proper positioning of the trays below the laser heads 88. The guides 90 may have a lead-in taper such that the trays may be received by the guides 90 when the linear actuator arms 86 push the trays towards the guides 90.

As depicted in Figure 3A, when the trays are pushed by the linear actuator arms 86 below the laser heads 88, the trays are pushed onto an exit conveyer 92.

The laser heads 88 may be configured to apply the marking 40 onto the rounds of ammunition in the tray.

It will be appreciated that other machines or devices may be used to apply markings 0 to bullets 12. For example, numerous commercially available laser etching machines may be capable of performing the necessary laser etching to apply a marking 40 to a bullet 12.

After the marking 40 has been applied to the rounds of ammunition, the exit conveyer 92 conveys the trays of marked rounds of ammunition for storage or shipping, such as packaging the rounds, marking the packaging with the marking 40, or shipping to a distributor or retailer.

Referring again to Figure 1, the database system 103 may be accessible by the server 102. The server 102 may be based on any suitable operating system, such as Microsoft Windows, Linux or the like.

Database system 103 may be accessible by one or more client computing devices 110. Client computing devices 110 may be connected directly to network 106, or may be connected to network 106 by way of another network 112, as depicted in Figure 1, which may be a LAN or a WAN such as the internet. Client computing devices 110 may be, for example, personal computers, desktop computers, laptop computers, smartphones, tablet computers, or the like, and may be based on any suitable operating system, such as Microsoft Windows, Apple OS X or iOS, Linux, Android, or the like. For example, the client computing device 110 is a smartphone configured to capture binary large objects, such as images of a casing. The client computing device 110 may be used, for example, by law enforcement. However, the client computing device 110 may be used by any party desiring to capture an image of marking 40 on a bullet 12. For example, a distributor, supply chain manager, supplier, or various other parties may wish to scan a bullet 12 for inventory tracking purposes.

The database system 103 and the client computing device 110 may be configured such that the client computing device 110 encrypts the data to be transmitted by the client computing device 110 to the database system 103. The encrypted data from the client computing device 110 may be decrypted by the server 102 and may be processed by the server 102. The server 102 may also encrypt the data to be transmitted from the server 102 to the client computing device 110. The encrypted data from the server 102 may be decrypted by the client computing device 110 and may be processed by the client computing device 110. Encryption and decryption may be performed according to elliptic curve cryptography, RSA cryptosystem, or other suitable encryption techniques. In some examples, encryption and decryption may be performed according to the pretty good privacy (PGP) standard.

In some embodiments, the database 103 may be implemented as a distributed database. For example, nodes for database 103 may be provided by numerous different parties (e.g. some nodes provided by an ammunition manufacturer, some nodes may be provided by a distributer or retailer, some nodes may be provided by military or law enforcement, or the like). In some embodiments, records in the database system 103 may be implemented using one or more blockchains..

The client computing devices 110 may be existing devices or may be new devices. Where the client computing devices 110 are existing devices, they may need to be updated with software such that the database system 103 is accessible by the client computing device 110.

Some client devices 110 may be used for population of data into database system 103. Such client devices 110 may be any suitable type of computing device, such as PCs, smartphones, tablet computers, or the like. Data population devices may be equipped with text input devices, as well as optical data acquisition devices such as cameras or specialized barcode scanners.

Client devices 110 for data population may be present at facilities of ammunition manufacturers, retailers, or distributors, such as commercial ammunition manufacturers, commercial retailers, law enforcement, the military, government, schools for teaching how to use firearms, firearms licensing institutions, and the like.

In the depicted example, client device 110a is a data population device at marking facility 101, and client device 110b is at a retailer or distributor.

Population of data may be automated or semi-automated. For example, markings 40 on casings of bullets 12 or on ammunition packages may be scanned at the time of marking or packaging at marking facility 101. Client device 110a may transmit marking data to database system 103, which may prompt creation of new records. In some embodiments, the marking data may be transmitted to a node maintained by the manufacturer of the ammunition or the marking facilitator and this node may be included as a node in a distributed computing system. In some embodiments, marking data transmitted by client device 110a may include the marking 40 or a decoded version thereof, as well as supplementary data, such as machinery used, components used, production date, lot number of the ammunition, lot numbers of the components used, the identity of the manufacturer, caliber, gauge, bore, type of projectile used in the ammunition, and the like. The supplementary data may be entered, e.g. by an operator at client device 110a.

Additionally or alternatively, supplementary data may be generated automatically, e.g. using a unique token at client device 110. In other examples, the marking 40 may itself include data such as machinery used, components used, production date, lot number of the ammunition, lot numbers of the components used, the identity of the manufacturer, caliber, gauge, bore, type of projectile used in the ammunition, and the like, in addition to or as part of the ammunition identifier. In some embodiments, marking 40 may be scanned subsequent to marking on bullets 12 or packages and then sent to database system 103. In other embodiments, client device 110 may be integrated with or in communication with handling apparatus 10, such that marking 40 and any supplementary data may be transmitted to database system 103 concurrently with marking of bullets 12, i.e. without any need for subsequent scanning.

Population of data may likewise be automated or semi-automated at the retailer or distributor. Marking 40 may be scanned, for example, on receipt by the retailer or distributor, or at the time of sale, and transmitted to database system 103 for storage.

The database system 103 and client devices 110a and 110b may be configured such that the client devices 110a and 110b encrypt the data to be transmitted to the database system 103. The encrypted data from the client devices 110a and 110b may be decrypted by the server 102 and may be processed by the server 102. The server 102 may also encrypt the data to be transmitted from the server 102 to client devices 110a and 110b. The encrypted data from the server 102 may be decrypted and processed by the client devices 110a and 110b. In some embodiments, the client devices 110 may act as nodes in a distributed database.

To access the database system 103, such as via the server 102 or the client computing device 110, a valid user license identification may be required to validate access by the user. In some embodiments, the user license identification is a password or a thumbprint. In some embodiments, different nodes in a distributed database may offer different access to data. This may allow for sensitive or personal data to be protected from being accessed by parties who are not authorized to access such data. In embodiments involving distributed databases with nodes maintained by different parties, nodes in custody of different parties maintain communication with other nodes so as to form the distributed database. Access control can be co-ordinated among different parties so as to provide the necessary functionality to ensure data privacy and security while also providing the functionality to allow authorized parties to obtain the desired data. For example, a law enforcement agency may obtain permission to access some or all information contained in some or all records in a distributed database.

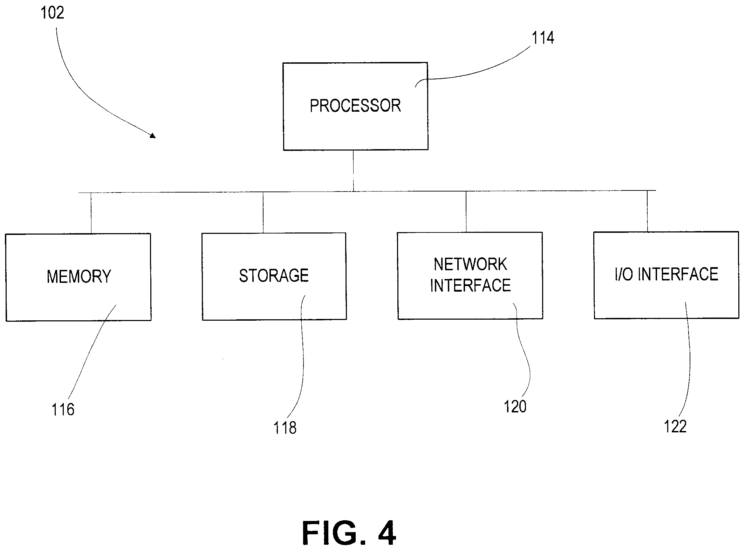

Figure 4 is a block diagram of components of an example server 102. As depicted, each server 102 includes a processor 114, memory 116, persistent storage 118, network interface 120 and input/output interface 122.

Processor 114 may be an Intel or AMD x86 or x64, PowerPC, ARM processor, or the like. Processor 114 may operate under control of software loaded in memory 116. Network interface 120 connects server 102 to network 106. I/O interface 122 connects server 102 to storage 104 and may further connect server 102 to one or more peripherals such as keyboards, mice, USB devices, disc drives, and the like.

Software may be loaded onto server 102 from peripheral devices or from network 106. Such software may be executed using processor 114.

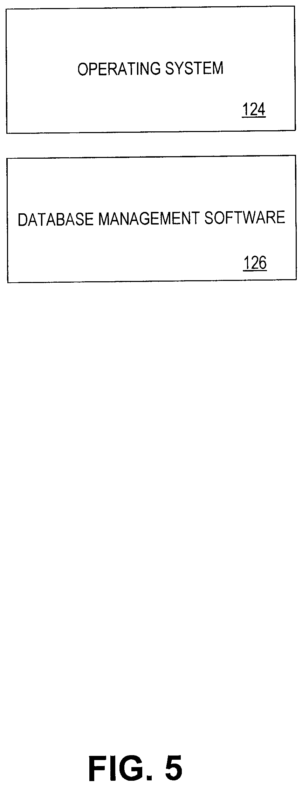

Figure 5 depicts a simplified arrangement of software at a server 102. The software may include an operating system 124 and application software, such as database management system 126. Database management system 126 may be a system configured for compatibility with the relational database model using a language such as SQL. The database management system 126 may maintain a database 130 in storage 104, e.g. a relational database comprising one or more tables with fields in columnar format.

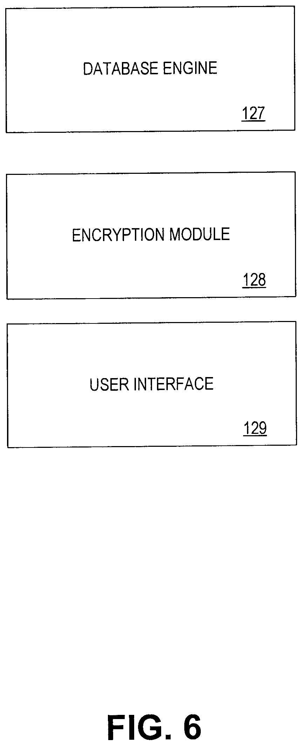

Database management system 126 may itself have a number of components, as depicted in Figure 6. For example, database management system 126 may include a database engine 127, an encryption module 128, and a user interface 129.

Database engine 127 may allow database management system 126 to access the database 130 for the purpose of reading, creating, deleting, updating records and the like. In embodiments which use blockchain technology, the database may be maintained across numerous computing machines (e.g. in a cloud computing system or distributed computing system) and the modification of records stored in the blockchain may require validation from several other computing devices.

The encryption module 128 may encrypt or decrypt data that is stored in the database 130, and may encrypt or decrypt data that is received by the server 102 or transmitted by the server 102 to, for example, the client computing device 110.

The software may also include a user interface 129. User interface 129 may be configured to receive requests for accessing data in database 130 and to return results. User interface 129 may be presented locally at server 102 for operation by a user. Alternatively, or additionally, user interface 129 may be presented remotely, e.g., through a web browser or application at a client computing device 110.

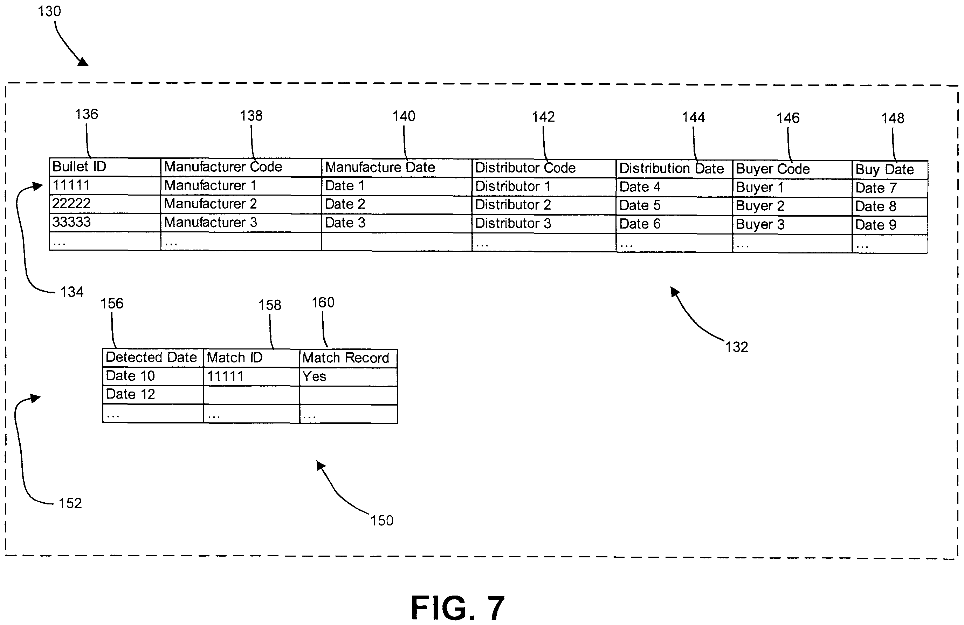

Figure 7 depicts example tables of database 130. As used herein, references to columns or rows of database 130 may relate to columns or rows of tables within database 130. References herein to performing operations (e.g. ordering, sorting, distributing) based on a column mean performing those operations based on values of a field stored in that column. In other embodiments, database 130 may be another type of database, such as a document-oriented database or an object-oriented database. In such embodiments, database records may correspond to documents or objects, respectively. Columns may correspond to data fields in the objects or records. Rows may likewise correspond to documents or objects, such that references to ordering of rows may instead relate to ordering of documents or objects. In some embodiments, records and tables of database 130 may be stored in one or more blockchains or may be spread across different nodes in a distributed database.

As depicted in Figure 7, database 130 includes two tables 132 and 150. Table 132 includes a plurality of records 134 of ammunition data. Each record 134 contains values in a number of fields arranged in columns. As depicted, the values recorded in table 132 are associated with the identification of a bullet 12 and a sales transaction of the bullet, and may include values in a Bullet ID column 136, Manufacturer Code column 138, Manufacture Date column 140, Distributor Code column 142, Distribution Date column 144, Buyer Code column 146, and Buy Date column 148.

The Bullet ID column 136 may contain values corresponding to the unique mark 40 of the casing of the ammunition. The Manufacture Code column 138 may contain values corresponding to the identity of the manufacturer. In some embodiments, each manufacturer that manufactures ammunition with a casing having a unique mark may have their own code to associate the ammunition and its manufacturer. The Manufacture Date column 140 may contain values corresponding to the date on which the ammunition was manufactured. The Distributor Code column 142 may contain values corresponding to the identity of the distributor. In some embodiments, each distributor that distributes ammunition with a casing having a unique mark may have their own code to associate the ammunition and its distributor. The Distribution Date column 144 may contain values corresponding to the date on which the ammunition was distributed. The Buyer Code column 146 may contain values corresponding to the identity of the buyer. In some embodiments, each buyer who buys ammunition with a casing having a unique mark may have their own code to associate the ammunition and its buyer. The Buy Date column 148 may contain values corresponding to the date on which the ammunition was purchased.

Table 150 includes a plurality of records 152. As depicted in Figure 7, the values recorded in table 150 are associated with the ammunition that have been used, and may include values in a Detected Bullet ID column 154 (not shown), a Date column 156, and a Match ID column 158. In some embodiments, the values recorded in table 150 are associated with casings found at a crime scene.

The Detected Bullet ID column 154 may contain values corresponding to the captured binary large object, such as an image of the unique mark 40 of the ammunition casing. The Detected Date column 156 may contain values corresponding to the date on which the image of the unique mark was scanned. The Match ID column 158 may contain values identifying whether the processor 102 found a match between values in the Bullet ID column 136 and the Detected Bullet ID column 154. Specifically, if a match is found, match ID column 158 may be populated with the value of the corresponding bullet ID 136. If no match is found, match ID column 158 may be set to another value, e.g. a null value.

In some embodiments, tables of database 130 may comprise supplementary data related to the bullet 12, such as machinery used, components used, production date, lot number of the ammunition, lot numbers of the components used, the identity of the manufacturer, caliber, gauge, bore, type of projectile used in the ammunition, and the like.

Database 130 may have more or fewer tables containing more or fewer columns than depicted and may contain information other than sales, manufacturing, distribution, and ammunition identification information.

In some embodiments, database 130 may have a plurality of tables, where each table is associated with one entity, such as a manufacturer. In such embodiments, the Manufacture Code column 138 may be omitted, as the information contained in said tables relate to one particular manufacturer.

In some embodiments, the tables of database 130 may be populated with information associated with government agencies of a particular jurisdiction. For example, where the particular jurisdiction is the United States, the government agencies may be the Federal Bureau of Investigation, Central Intelligence Agency, and Homeland Security.

In some embodiments, the tables of database 130 may be populated with information associated with particular law enforcement agencies (e.g. a police force) of a particular jurisdiction. For example, where the particular jurisdiction is one of the states of the United States, the tables may be populated with information associated with the police force of the districts or counties of that state.

In some embodiments, the tables of database 130 may be populated with information associated with a particular jurisdiction. For example, the tables may be populated with information associated with a country, such as the United States, Canada, United Kingdom, France, and the like.

In some embodiments, the tables of database 130 may be populated with information associated with an international agency. For example, the tables may be populated with information associated with Interpol, the International Air Transport Association, and the like.

In some embodiments, the data storage 104 may store a plurality of databases 130, where each database 130 may have tables to be populated with information.

In some embodiments, the tables of the databases 130 may be populated with information associated with government agencies of a particular jurisdiction. For example, where the particular jurisdiction is the United States, the government agencies may be the Federal Bureau of Investigation, Central Intelligence Agency, and Homeland Security.

In some embodiments, the tables of the databases 130 may be populated with information associated with particular law enforcement agencies (e.g. a police force) of a particular jurisdiction. For example, where the particular jurisdiction is one of the states of the United States, the tables of the databases 130 may be populated with information associated with the police force of the districts or counties of that state.

In some embodiments, the tables of the databases 130 may be populated with information associated with a particular jurisdiction. For example, the tables of the databases 130 may be populated with information associated with a country, such as the United States, Canada, United Kingdom, France, and the like.

In some embodiments, the tables of the databases 130 may be populated with information associated with an international agency. For example, the tables of the databases 130 may be populated with information associated with Interpol, the International Air Transport Association, and the like.

Tables of databases 130 belonging to different entities, such as different manufacturers, jurisdictions or agencies, may be hosted at separate servers 102. Alternatively or additionally, tables of databases 130 may be logically segregated from one another to guard against unauthorized access. For example, tables of databases 130 for each entity may be encrypted using different encryption keys.

Requests entered through user interface 129 may include record insertion, deletion or update, and queries requiring identifying the owner of ammunition based on an image of a unique mark on a casing. For example, a manufacturer may transmit data from the client device 110a, as depicted in Figure 1, to the server 102, to store the data in the data storage 104. The data from the manufacturer may correspond to the unique marks on the casings of the ammunition that are manufactured by the manufacturer, and may also correspond to the identity of the manufacturer. The client device 110a may be on the site of the manufacturer. As another example, a distributor may transmit data from the client device 110b, as depicted in Figure 1, to the server 102, to store the data in the data storage 104. The data from the distributor may correspond to the unique marks on the casings of the ammunition that are manufactured by the manufacturer, the identity of the distributor, and the buyer. The client device 110b may be on the site of the distributor. As yet another example, a user, such as a member of law enforcement, may transmit data from the client computing device 110, as depicted in Figure 1, to the server 102, to request that the server 102 review the data in the data storage 104 and compare if the image of the unique mark transmitted from the client computing device 110 corresponds to any of the data in the data storage 104. The data from the user may correspond to the image of the unique marks on the casings of the ammunition that are found by the member of law enforcement. User interface 129 may be operable to receive instructions from a user, e.g., by text entry or using a graphical menu, and convert those instructions to a database language, such as SQL.

Requests entered through user interface 129 or received at user interface 129 may be encrypted and decrypted in accordance with the encryption and decryption techniques used by the database system 103.

In some embodiments, user interface 129 may host binary large objects.

The user interface 129 may be a graphical user interface. The user interface 129 may be configured for the particular user to input data for receiving requests to access data in database 130 and to return results. In some embodiments, the user interface 129 for the client computing device 110 may be configured to capture an image of a casing of ammunition and to transmit the image to the server 102.

In some embodiments, the user interface 129 for the system administrator may include fields where data may be input to for generating graphs and tables corresponding to usage of the database.

In some embodiments, the user interface 129 for the client device 110a of the manufacturer may include fields where data corresponding to the unique mark of the manufactured ammunition and the identity of the manufacturer may be input for transmitting to the data storage 104.

In some embodiments, the user interface 129 for the client device 110b of the ammunition retailer or distributor may include fields where data corresponding to the unique mark of the manufactured ammunition, the identity of the retailer or distributor, or the identity of the buyer of the ammunition may be input for transmitting to the data storage 104. In some embodiments, the ammunition retailer or distributor may be the police, the military, the government, and training schools or facilities. These retailers or distributors may have particular requirements that need to be met prior to selling or issuing ammunition. The user interface 129 for the client device 110b of the ammunition retailer or distributor may be configured to meet these particular requirements such that the ammunition having the unique mark may be sold or issued.

In operation, the data storage 104 and the database 130 are populated with data from the ammunition manufacturer and the retailer or distributor to associate ammunition manufactured by the manufacturer with the buyer of the ammunition.

The ammunition manufacturer may manufacture ammunition having a casing with a unique mark 40 on it. In some embodiments, the unique mark 40 may be a combination of alphanumeric numbers, a code similar to a bar code, a QR code, or the like. The unique mark 40 may be marked, cut, engraved, or punched on the ammunition casing. In some embodiments, the unique mark 40 is laser etched onto the ammunition casing. The unique mark 40 may also be printed on the packaging in which the ammunition having the same unique mark 40 is sold.

The unique mark 40 on the ammunition casing may conform with industry standards such as American National Standards Institute (ANSI), International Organization for Standards (ISO), or another standard.

After the ammunition having the unique mark 40 is manufactured, the manufacturer may input data corresponding to the unique mark 40 of the ammunition, the manufacturer identity, and the manufacture date to the client device 110a. As noted above, data may be input by scanning of marking 40, by user input, e.g. with a keyboard, or a combination thereof.

Scanning of marking 40 may be done using a typical smartphone camera, with a specialized camera or another optical data acquisition device such as a barcode scanner. Camera-based scanning may be aided by a device such as a lightbox, designed to provide a background of uniform colour and brightness. In an example, the device may be a white box in which ammunition may be placed and lit from one side of the box.

Alternatively, client device 110a may be synchronized with handling apparatus 10 and may transmit marking data to database system 103 without the need for scanning. For example, laser marking head 14 of handling apparatus 10 may receive marking instructions from a controller which may be part of or connected to client computing device 11 0a. The marking instructions may therefore be directly provided to client computing device 110a and transmitted to database system 103.

If the manufacturer knows of the identity of the retailer or distributor that the ammunition is being sold to, the manufacturer may also input data to the client device 110a corresponding to the retailer or distributor identity. The client device 110a transmits the data from the manufacturer to the server 102 and the data is stored in the data storage 104, such as in table 132 of database 130. For example, the data from the manufacturer may be stored under Bullet ID column 136, the Manufacturer Code column 138, the Manufacture Date column 140, and the Distributor Code column 142.

After the ammunition from the manufacturer is received by the distributor or retailer, the ammunition may be distributed, issued, or sold, such as to civilians or members of law enforcement. The distributor or retailer may input data corresponding to the unique mark 40 of the ammunition, the distributor or retailer identity, the distribution date, the buyer identity, and the date of the transaction to the client device 110b. Such input may be done by scanning of a marking 40 on individual rounds of ammunition or on ammunition packages. The scanning may be performed using a camera such as a smartphone camera, optionally aided by a lightbox device, or a specialized optical scanner such as a barcode scanner. The client device 110b transmits the data from the distributor or retailer to the server 102 and the data is stored in the data storage 104, such as in table 132 of database 130. The server 102 associates the data from the distributor or retailer with the data from the manufacturer by comparing the data corresponding to the unique mark of the ammunition. The data corresponding to the unique mark of the ammunition, from the manufacturer and from the distributor or retailer, is associated together, such as by populating a row of the table 132, as depicted in Figure 6. For example, the data from the distributor or retailer may be stored under the Distributor Code column 142, the Distributor Date column 144, the Buyer Code column 146, and the Buy date column 148. As depicted in Figure 7, the database 130 contains data that associates the ammunition having the unique mark 40 to the buyer of the ammunition.

In some embodiments, the client devices 110a and 110b transmit data to the server 102 at a particular frequency, such as after a pre-determined number of ammunition is manufactured, sold, or issued.

In some embodiments, the client devices 110a and 110b of the manufacturer, distributor, or retailer may have a backup data storage in the event that transmission of data fails, such as due to a power failure.

In some embodiments, the data transmitted from the client devices 110a and 110b to the server 102 may comprise checksums such that the data may be recompiled.

In some embodiments, the manufacturer, distributor, or retailer may be able to access the database system 103 via the client device 110a or 110b to submit changes or updates to the data, such as if the data initially submitted to the server 102 was incorrect. In some embodiments, the manufacturer, distributor, or retailer may submit the data to a system administrator, who may access the database system 103 to update the data.

The client devices 110a and 110b may be configured to encrypt the data from the manufacturer, distributor, or retailer prior to transmitting to the server 102.

After the ammunition is sold or issued, the ammunition is used, and the casing having the unique mark 40 may be retrieved, such as by law enforcement.

Data corresponding to the ammunition casing, in particular the unique mark 40, may be input into and transmitted from the client computing device 110 to the server 102. For example, where the ammunition casing is retrieved by a member of law enforcement, a binary large object, such as an image of the unique mark 40, may be captured by the member of law enforcement by a handheld device, such as a smartphone, when the ammunition casing is first retrieved, or may be captured by the member of law enforcement by a computer or scanner at the police station. The data corresponding to the binary large object (e.g. image of the unique mark 40) received by the server 102 from the client computing device 110 may be stored in the database 130, such as in table 150 of database 130.

In addition, the client computing device 110 may send a control command to the server 102 for the server 102 to compare the data corresponding to the unique mark 40 of the retrieved ammunition casing with the data corresponding to unique marks of ammunition stored in the database 130, such as the data from table 132, which is provided by the manufacturer, distributor, or retailer. The server 102 may identify that the data corresponding to the unique mark 40 of the retrieved ammunition casing corresponds to data of the unique marks of ammunition stored in the database 130. If the server 102 finds a match, the server 102 may record that a match was found, and populate values under the Match ID column 158, such as with a "Yes". The server 102 may transmit data back to the client computing device 110, said data corresponding to all the data associated with the particular unique mark 40 of the ammunition, including the purchaser of the ammunition.

For example, as depicted in Figure 7, database 130 contains table 132 having data associated with a Bullet ID "11111". The client computing device 110 may transmit a binary large object, such as image data, to the server 102, the image data corresponding to the unique mark 40 of a retrieved ammunition casing. The unique mark 40 of the retrieved ammunition casing may be "11111 ". The binary large object, such as the image data corresponding to the unique mark 40 of a retrieved ammunition casing, may be stored in table 150. The server 102 may compare the data of the retrieved ammunition casing with the data stored in table 132, and identify that there is a match. The server 102 notes that a match was found, and the server 102 sends all the data associated with Bullet ID "11111" from table 132 to the client computing device 110. The client computing device 110 may be configured to render the data from the server 102 on a display of the client computing device 110. Accordingly, the user may know the purchaser of the ammunition, which had the casing that was retrieved.

Where the server 102 does not record a match between the image data corresponding to the unique mark 40 of a retrieved ammunition casing and the data stored in table 132 of database 130, the record may be flagged for follow up. The server 102 may record that a match was not found, and populate values under the Match Record column 158, such as with a "No". In some embodiments, this may indicate that there was an issue with data transmitted from the client devices 110a and 110b. In some embodiments, this may indicate that the unique mark 40 on the retrieved casing may have been damaged or worn out.

In some embodiments, the client computing device 110 may have a backup data storage in the event that transmission of data fails, such as due to a power failure.

In some embodiments, the data transmitted from the client computing device 110 to the server 102 may comprise checksums such that the data may be recompiled.

In some embodiments, the user may be able to access the database system 103 via the client computing device 110 to submit changes or updates to the data, such as if the data initially submitted to the server 102 was incorrect. In some embodiments, the user may submit the data to a system administrator, who may access the database system 103 to update the data.

The client computing device 110 may be configured to encrypt data from the user prior to transmitting to the server 102. The server 102 may be configured to encrypt data from the user prior to transmitting to the client computing device 110. In some embodiments, all communication to and from the server 102 may be encrypted.

In some embodiments, after the retrieved ammunition casing has been scanned, the user (e.g. law enforcement) may retain the casing. In other embodiments, the casing may be sent to the administrator of the database system 103, the manufacturer, retailer, or distributor.

In operation, the data storage 104 and the database 130 are populated with supplementary data associated with the ammunition, such as machinery used, components used, production date, lot number of the ammunition, lot numbers of the components used, the identity of the manufacturer, caliber, gauge, bore, type of projectile used in the ammunition, and the like. The supplementary data may be input by the ammunition manufacturer, the retailer or distributor, using client device 110a or 110b, respectively.

The database system 103, storing the supplementary data in the data storage 104 and the database 130, may be used to track the manufacturer, and the machinery and the components used to manufacture the ammunition.

For example, data corresponding to the unique mark 40 on the casing of a round of ammunition may be input into and transmitted from the client computing device 110 to the server 102. The data corresponding to the binary large object (e.g. image of the unique mark) received by the server 102 from the client computing device 110 may be stored in the database 130.

In addition, the client computing device 110 may send a control command to the server 102 for the server 102 to compare the data corresponding to the unique mark 40 of the casing with the data corresponding to unique marks of ammunition stored in the database 130. The server 102 may identify that the data corresponding to the unique mark of the retrieved ammunition casing corresponds to data of the unique marks of ammunition stored in the database 130. The server 102 may transmit data back to the client computing device 110, said data corresponding to all the data associated with the particular unique mark of the ammunition, including the supplementary data.

Accordingly, the round of ammunition may be associated with a particular manufacturer, a lot number, the machinery and components used to manufacture the round of ammunition, and the like. For example, in regards to a defective round of ammunition, this information may be used to identify the cause of the defect, or may be used to identify other ammunition that may be manufactured using the same machinery or components, such that other potentially defective rounds of ammunition may be identified. These potentially defective rounds of ammunition may be returned to the manufacturer, retailer, or distributor before the defective rounds of ammunition are used. The manufacturer may contact the retailer, distributor, or the end user to request return of the defective rounds of ammunition.

The supplementary data stored in the data storage 104 and the database 130 may also be used to track and confirm the number of components used to manufacture the ammunition, including scrap, etc. to have a record of the inventory used to manufacture the ammunition or available to manufacture additional ammunition.

In some embodiments, the server 102 and the data storage 104 may be upgraded. The upgrade may be installed remotely, or the data system 100 may be shut down. The upgrade may be installed in portions in a sequence, or all at once. The server 102 and the data storage 104 may be upgraded with a vendor patch.

In some embodiments, the data in the data storage 104 may be regularly backed up using a backup schedule. The backup data may reside in a separate server and database, or may reside in the cloud.

In some embodiments, the database system 103 may be organized as a distributed database, such as a block chain.

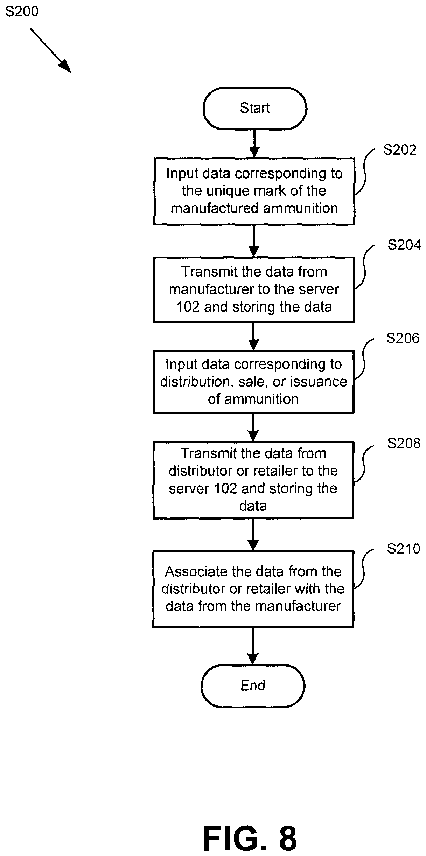

Figure 8 is a flow diagram of a process S200 of populating the database 130 of the database system 103.

At S202, the manufacturer manufactures ammunition having a casing with a unique mark. The manufacturer inputs data into the client device 110a, the data corresponding to the unique mark of the ammunition. Other data may also be input into the client device 110a, including the manufacturer identity, and the manufacture date, and the identity of the retailer or distributor that the ammunition is being sold to.

At S204, the client device 110a transmits the data from the manufacturer to the server 102 and the data is stored in the data storage 104, such as in table 132 of database 130.

At S206, the distributor or retailer distributes, issues, or sells the ammunition having the unique mark. The distributor or retailer inputs data corresponding to the unique mark of the ammunition, the distributor or retailer identity, the distribution date, the buyer identity, and the date of the transaction to the client device 110b.

At S208, the client device 110b transmits the data from the distributor or retailer to the server 102 and the data is stored in the data storage 104, such as in table 132 of database 130.

At S210, the server 102 associates the data from the distributor or retailer with the data from the manufacturer by comparing the data corresponding to the unique mark of the ammunition, such that the database 130 contains data that associates the ammunition having the unique mark to the buyer of the ammunition.

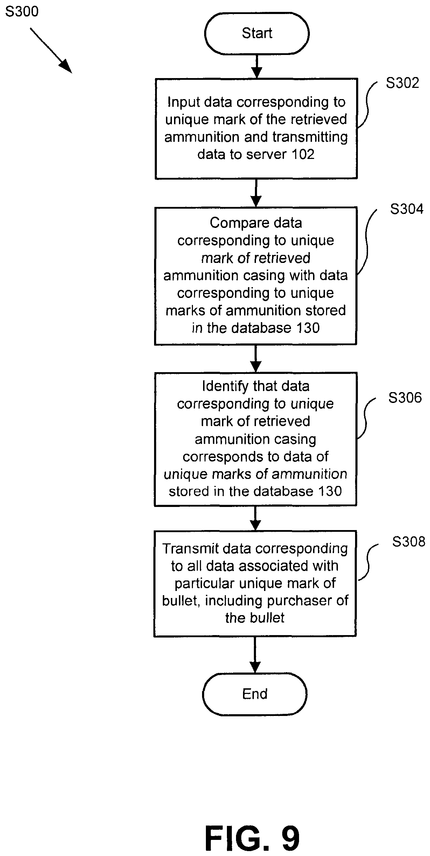

Figure 9 is a flow diagram of a process S300 of identifying the purchaser of ammunition based on a retrieved casing.

At S302, data corresponding to the unique mark on the retrieved ammunition casing may be input into the client computing device 110 and may be transmitted from the client computing device 110 to the server 102. The client computing device 110 may be the smartphone or another optical data acquisition device of a member of law enforcement, and the data may be a binary large object, such as an image of the casing and the unique mark captured by the smartphone, or another suitable format of data that corresponds to the unique mark on the retrieved ammunition casing.

At S304, the client computing device 110 sends a control command to the server 102 for the server 102 to compare the data corresponding to the unique mark of the retrieved ammunition casing with the data corresponding to unique marks of ammunition stored in the database 130, such as the data from table 132, which is provided by the manufacturer, distributor, or retailer.

At S306, the server 102 identifies that the data corresponding to the unique mark of the retrieved ammunition casing corresponds to data of the unique marks of ammunition stored in the database 130.

At S308, the server 102 transmits data back to the client computing device 110, said data corresponding to all the data associated with the particular unique mark of the ammunition, including the purchaser of the ammunition.

The preceding discussion provides many example embodiments. Other examples may include all suitable combinations of the disclosed elements. For example if one embodiment comprises elements A, B, and C, and a second embodiment comprises elements B and D, other remaining suitable combinations of A, B, C, or D, may also be used.

The term "connected" or "coupled to" may include both direct coupling (in which two elements that are coupled to each other contact each other) and indirect coupling (in which at least one additional element is located between the two elements).

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized. The examples described above and illustrated are intended to be examples only. Modifications may be possible. The invention is defined by the appended claims.

## Claims

1. An ammunition tracking system (100) comprising:
a server (102) having a data storage (104);
ammunition;
the server (102) being configured to:
receive (S204) data corresponding to a symbolic encoded identifier marked on a casing of the ammunition (12), wherein at least one error detection code is incorporated into the symbolic encoded identifier;
receive (S208) data (132) corresponding to a purchaser of the ammunition (12);
associate (S210) the data corresponding to the symbolic encoded identifier with the data (132) corresponding to the purchaser of the ammunition (12);
receive (S302) data (150) corresponding to a retrieved ammunition casing;
compare (S304) the data (150) corresponding to the retrieved ammunition casing with the data corresponding to identification of the ammunition (12); and
upon matching (S306) the data corresponding to the retrieved ammunition casing with the data corresponding to identification of the ammunition (12), transmit (S308) the data corresponding to the purchaser of the ammunition (12).

2. The ammunition tracking system (100) of claim 1, wherein a first data population device (110a) transmits (S204) the data corresponding to identification of the ammunition (12) to the server (102), or
wherein a client computing device (110) transmits (S302) the data (150) corresponding to the retrieved ammunition casing to the server (102).

3. The ammunition tracking system (100) of claim 2, wherein the data transmitted by the first data population device (110a) includes data corresponding to a unique mark (40) on the casing of the ammunition (12).

4. The ammunition tracking system (100) of claim 3, wherein the unique mark (40) is a laser etched bar code, or
wherein a second data population device (110b) transmits the data (120) corresponding to the purchaser of the ammunition (12) to the server (102).

5. The ammunition tracking system (100) of claim 4, wherein the data (150) transmitted by the second data population device (110b) includes data corresponding to the unique mark (40) on the casing of the ammunition (12).

6. The ammunition tracking system (100) of claim 5, wherein the server (102) is configured to associate the identification of the ammunition (12) with the purchaser of the ammunition (12) using the data corresponding to the unique mark (40) on the casing of the ammunition (12).

7. The ammunition tracking system (100) of claim 2, wherein the server (102) is configured to receive a control command from the client computing device (110) to compare the data corresponding to identification of the ammunition (40) with the data (150) corresponding to the retrieved ammunition casing.

8. A method (S200; S300) of identifying a purchaser of ammunition (12) based on a retrieved ammunition casing, comprising:
populating (S202) a data storage (104) of a server (102) by:
receiving (S204) data corresponding to identification of the ammunition (12) marked on a casing of the ammunition, wherein at least one error detection code is incorporated into the identification of the ammunition (12);
receiving (S208) data (132) corresponding to the purchaser of the ammunition (12);
associating (S210) the data corresponding to identification of the ammunition (12) with the data corresponding to the purchaser of the ammunition (12);
receiving (S302) data (150) corresponding to the retrieved ammunition casing;
comparing (S304) the data (150) corresponding to the retrieved ammunition casing with the data corresponding to identification of the ammunition (12); and
upon matching (S306) the data (150) corresponding to the retrieved ammunition casing with the data corresponding to identification of the ammunition (12), transmitting (S308) the data (132) corresponding to the purchaser of the ammunition (12).

9. The method (S200; S300) of claim 8, further comprising:
transmitting (S204) the data corresponding to identification of the ammunition (12) with a first data population device (110a), or
transmitting (S302) the data (150) corresponding to the retrieved ammunition casing using a client computing device (110).

10. The method (S200; S300) of claim 9, wherein the data transmitted by the first data population device (110a) includes data corresponding to a unique mark (40) on the casing of the ammunition (12).

11. The method of claim 10, wherein the unique mark is a laser etched bar code.

12. The method (S200; S300) of claim 10, comprising transmitting the data (132) corresponding to the purchaser of the ammunition using a second data population device (110b).

13. The method (S200; S300) of claim 12, wherein the data (132) transmitted by the second data population device (110b) includes data corresponding to the unique mark (40) on the casing of the ammunition (12).

14. The method (S200; S300) of claim 13, comprising associating the identification of the ammunition (12) with the purchaser of the ammunition (12) using the data corresponding to the unique mark (40) on the casing of the ammunition (12).

15. The method (S200; S300) of claim 9, comprising receiving a control command from the client computing device (110) to compare the data corresponding to identification of the ammunition (12) with the data (150) corresponding to the retrieved ammunition casing.

## Patentansprüche

1. Munitionsverfolgungssystem (100), Folgendes umfassend:
einen Server (102) mit einem Datenspeicher (104);
Munition;
wobei der Server (102) zu Folgendem konfiguriert ist:
Empfangen (S204) von Daten, die einer symbolisch codierten Kennung entsprechen, die auf einer Hülse der Munition (12) markiert ist, wobei mindestens ein Fehlererkennungscode in die symbolisch codierte Kennung integriert ist;
Empfangen (S208) von Daten (132), die einem Käufer der Munition (12) entsprechen;
Zuordnen (S210) der Daten, die der symbolisch codierten Kennung entsprechen, zu den Daten (132), die dem Käufer der Munition (12) entsprechen;
Empfangen (S302) von Daten (150), die einer zurückerhaltenen Munitionshülse entsprechen;
Vergleichen (S304) der Daten (150), die der zurückerhaltenen Munitionshülse entsprechen, mit den Daten, die der Identifikation der Munition (12) entsprechen; und,
bei einer Übereinstimmung (S306) der Daten, die der zurückerhaltenen Munitionshülse entsprechen, mit den Daten, die der Identifikation der Munition (12) entsprechen, Übertragen (S308) der Daten, die dem Käufer der Munition (12) entsprechen.

2. Munitionsverfolgungssystem (100) nach Anspruch 1, wobei eine erste Datenbefüllungsvorrichtung (110a) die Daten, die der Identifikation der Munition (12) entsprechen, an den Server (102) überträgt (S204) oder
wobei eine Client-Rechenvorrichtung (110) die Daten (150), die der zurückerhaltenen Munitionshülse entsprechen, an den Server (102) überträgt (S302).

3. Munitionsverfolgungssystem (100) nach Anspruch 2, wobei die durch die erste Datenbefüllungsvorrichtung (110a) übertragenen Daten Daten beinhalten, die einer eindeutigen Markierung (40) auf der Hülse der Munition (12) entsprechen.

4. Munitionsverfolgungssystem (100) nach Anspruch 3, wobei die eindeutige Markierung (40) ein lasergeätzter Strichcode ist oder wobei eine zweite Datenbefüllungsvorrichtung (110b) die dem Käufer der Munition (12) entsprechenden Daten (120) an den Server (102) überträgt.

5. Munitionsverfolgungssystem (100) nach Anspruch 4, wobei die durch die zweite Datenbefüllungsvorrichtung (110b) übertragenen Daten (150) Daten beinhalten, die der eindeutigen Markierung (40) auf der Hülse der Munition (12) entsprechen.

6. Munitionsverfolgungssystem (100) nach Anspruch 5, wobei der Server (102) konfiguriert ist, um die Identifikation der Munition (12) dem Käufer der Munition (12) unter Verwendung der Daten, die der eindeutigen Markierung (40) auf der Hülse der Munition (12) entsprechen, zuzuordnen.

7. Munitionsverfolgungssystem (100) nach Anspruch 2, wobei der Server (102) konfiguriert ist, um einen Steuerbefehl von der Client-Computervorrichtung (110) zu empfangen, um die Daten, die der Identifikation der Munition (40) entsprechen, mit den Daten (150) zu vergleichen, die der zurückerhaltenen Munitionshülse entsprechen.

8. Verfahren (S200; S300) zum Identifizieren eines Käufers von Munition (12) basierend auf einer zurückerhaltenen Munitionshülse, Folgendes umfassend:
Befüllen (S202) eines Datenspeichers (104) eines Servers (102) durch:
Empfangen (S204) von Daten, die einer Identifikation der Munition (12) entsprechen, die auf einer Hülse der Munition markiert ist, wobei mindestens ein Fehlererkennungscode in die Identifikation der Munition (12) integriert ist;
Empfangen (S208) von Daten (132), die dem Käufer der Munition (12) entsprechen;
Zuordnen (S210) der Daten, die der Identifikation der Munition (12) entsprechen, zu den Daten, die dem Käufer der Munition (12) entsprechen;
Empfangen (S302) von Daten (150), die der zurückerhaltenen Munitionshülse entsprechen;
Vergleichen (S304) der Daten (150), die der zurückerhaltenen Munitionshülse entsprechen, mit den Daten, die der Identifikation der Munition (12) entsprechen; und,
bei einer Übereinstimmung (S306) der Daten (150), die der zurückerhaltenen Munitionshülse entsprechen, mit den Daten, die der Identifikation der Munition (12) entsprechen, Übertragen (S308) der Daten (132), die dem Käufer der Munition (12) entsprechen.

9. Verfahren (S200; S300) nach Anspruch 8, ferner Folgendes umfassend:
Übertragen (S204) der Daten, die der Identifikation der Munition (12) entsprechen, mit einer ersten Datenbefüllungsvorrichtung (110a) oder
Übertragen (S302) der Daten (150), die der zurückerhaltenen Munitionshülse entsprechen, unter Verwendung einer Client-Rechenvorrichtung (110).

10. Verfahren (S200; S300) nach Anspruch 9, wobei die durch die erste Datenbefüllungsvorrichtung (110a) übertragenen Daten Daten beinhalten, die einer eindeutigen Markierung (40) auf der Hülse der Munition (12) entsprechen.

11. Verfahren nach Anspruch 10, wobei die eindeutige Markierung ein lasergeätzter Strichcode ist.

12. Verfahren (S200; S300) nach Anspruch 10, umfassend das Übertragen der dem Käufer der Munition entsprechenden Daten (132) unter Verwendung einer zweiten Datenbefüllungsvorrichtung (110b).

13. Verfahren (S200; S300) nach Anspruch 12, wobei die durch die zweite Datenbefüllungsvorrichtung (110b) übertragenen Daten (132) Daten beinhalten, die der eindeutigen Markierung (40) auf der Hülse der Munition (12) entsprechen.

14. Verfahren (S200; S300) nach Anspruch 13, umfassend das Zuordnen der Identifikation der Munition (12) zu dem Käufer der Munition (12) unter Verwendung der Daten, die der eindeutigen Markierung (40) auf der Hülse der Munition (12) entsprechen.

15. Verfahren (S200; S300) nach Anspruch 9, umfassend das Empfangen eines Steuerbefehls von der Client-Computervorrichtung (110) zum Vergleichen der Daten, die der Identifikation der Munition (12) entsprechen, mit den Daten (150), die der zurückerhaltenen Munitionshülse entsprechen.

## Revendications

1. Système de suivi de munitions (100) comprenant :
un serveur (102) ayant un stockage de données (104) ;
des munitions ;
le serveur (102) étant configuré pour :
recevoir (S204) des données correspondant à un identifiant codé symbolique marqué sur un boîtier de munitions (12), dans lequel au moins un code de détection d'erreur est incorporé dans l'identifiant codé symbolique ;
recevoir (S208) des données (132) correspondant à un acheteur des munitions (12) ;
associer (S210) les données correspondant à l'identifiant codé symbolique aux données (132) correspondant à l'acheteur des munitions (12) ;
recevoir (S302) des données (150) correspondant à un boîtier de munitions récupéré ;
comparer (S304) les données (150) correspondant au boîtier de munitions récupéré avec les données correspondant à l'identification de la munition (12) ; et
lors de la mise en correspondance (S306) des données correspondant au boîtier de munitions récupéré avec les données correspondant à l'identification des munitions (12), transmettre (S308) des données correspondant à l'acheteur des munitions (12) .

2. Système de suivi de munitions (100) selon la revendication 1, dans lequel un premier dispositif de remplissage de données (110a) transmet (S204) les données correspondant à l'identification des munitions (12) au serveur (102), ou
dans lequel un dispositif informatique client (110) transmet (S302) les données (150) correspondant au boîtier de munitions récupéré au serveur (102).

3. Système de suivi de munitions (100) selon la revendication 2, dans lequel les données transmises par le premier dispositif de remplissage de données (110a) incluent des données correspondant à une marque unique (40) sur le boîtier de munitions (12).

4. Système de suivi de munitions (100) selon la revendication 3, dans lequel la marque unique (40) est un code-barres gravé au laser, ou
dans lequel un second dispositif de remplissage de données (110b) transmet les données (120) correspondant à l'acheteur des munitions (12) au serveur (102).

5. Système de suivi de munitions (100) selon la revendication 4, dans lequel les données (150) transmises par le second dispositif de remplissage de données (110b) comportent des données correspondant à la marque unique (40) sur le boîtier de munitions (12).

6. Système de suivi de munitions (100) selon la revendication 5, dans lequel le serveur (102) est configuré pour associer l'identification des munitions (12) à l'acheteur des munitions (12) en utilisant les données correspondant à la marque unique (40) sur le boîtier de munitions (12).

7. Système de suivi de munitions (100) selon la revendication 2, dans lequel le serveur (102) est configuré pour recevoir un ordre de commande du dispositif informatique client (110) pour comparer les données correspondant à l'identification des munitions (40) avec les données (150) correspondant au boîtier de munitions récupéré.

8. Procédé (S200 ; S300) d'identification d'un acheteur de munitions (12) sur la base d'un boîtier de munitions récupéré, comprenant :
le remplissage (S202) d'un stockage de données (104) d'un serveur (102) en :
recevant (S204) des données correspondant à l'identification des munitions (12) marquée sur un boîtier de munitions, dans lequel au moins un code de détection d'erreur est incorporé dans l'identification des munitions (12) ;
recevant (S208) des données (132) correspondant à l'acheteur des munitions (12) ;
associant (S210) les données correspondant à l'identification des munitions (12) aux données correspondant à l'acheteur des munitions (12) ;
recevant (S302) des données (150) correspondant au boîtier de munitions récupéré ;
comparant (S304) les données (150) correspondant au boîtier de munitions récupéré avec les données correspondant à l'identification des munitions (12) ; et
lors de la mise en correspondance (S306) des données (150) correspondant au boîtier de munitions récupéré avec les données correspondant à l'identification des munitions (12),
transmettant (S308) les données (132) correspondant à l'acheteur des munitions (12).

9. Procédé (S200 ; S300) selon la revendication 8, comprenant en outre :
la transmission (S204) des données correspondant à l'identification des munitions (12) avec un premier dispositif de remplissage de données (110a), ou
la transmission (S302) des données (150) correspondant au boîtier de munitions récupéré en utilisant un dispositif informatique client (110).

10. Procédé (S200 ; S300) selon la revendication 9, dans lequel les données transmises par le premier dispositif de remplissage de données (110a) comportent des données correspondant à une marque unique (40) sur le boîtier de munitions (12).

11. Procédé selon la revendication 10, dans lequel la marque unique est un code-barres gravé au laser.

12. Procédé (S200 ; S300) selon la revendication 10, comprenant la transmission des données (132) correspondant à l'acheteur des munitions en utilisant un second dispositif de remplissage de données (110b).

13. Procédé (S200 ; S300) selon la revendication 12, dans lequel les données (132) transmises par le second dispositif de remplissage de données (110b) comportent des données correspondant à la marque unique (40) sur le boîtier de munitions (12) .

14. Procédé (S200 ; S300) selon la revendication 13, comprenant l'association de l'identification des munitions (12) à l'acheteur des munitions (12) en utilisant des données correspondant à la marque unique (40) sur le boîtier de munitions (12) .

15. Procédé (S200 ; S300) selon la revendication 9, comprenant la réception d'un ordre de commande du dispositif informatique client (110) pour comparer les données correspondant à l'identification des munitions (12) avec les données (150) correspondant au boîtier de munitions récupéré.
